# EUROPÄISCHE PATENTSCHRIFT

(11) **EP 1 531 982 B1**
(45) Veröffentlichungstag und Bekanntmachung des Hinweises auf die Patenterteilung: **10.05.2006**
(21) Anmeldenummer: 03747870.8
(22) Anmeldetag: 31.07.2003
(51) Int. Cl.: B29D 23/20, B65B 5/10, B65G 17/26

(54) **ANLAGE ZUM HERSTELLEN UND VERPACKEN VON TUBEN**
INSTALLATION FOR PRODUCING AND PACKING TUBES
INSTALLATION POUR PRODUIRE ET EMBALLER DES TUBES

(30) Priorität: 19.08.2002 DE 10237839
(43) Veröffentlichungstag der Anmeldung: 25.05.2005
(73) Patentinhaber: AISA AUTOMATION INDUSTRIELLE SA, 1896 Vouvry (CH)
(72) Erfinder: KELLER, Gerhard, CH-1805 Jongny (CH)
(74) Vertreter: Patentanwälte Zellentin & Partner
(86) Internationale Anmeldenummer: PCT/EP2003/008481
(87) Internationale Veröffentlichungsnummer: WO 2004/026567

(56) Entgegenhaltungen:
- DE-C- 110 833
- US-A- 3 896 710
- US-A- 6 047 525

## Beschreibung

Die Erfindung betrifft eine Anlage zum Herstellen und Verpacken von aus einem Rohrkörper aus mindestens einer Kunststofffolie und einem einends verbundenen Schulterstück mit Gewindehals und aufgebrachter Verschlusskappe bestehenden Tuben, die über ein Transportband zu einer Verpackungsstation zugeführt werden, wo sie zu größeren Einheiten verpackt werden. US. A. 3,896, 710 zeigt eine Anlage nach dem Oberbegriff des Anspruches 1.

Dieses Verfahren wird üblicherweise in zwei Stufen durchgeführt. In einer ersten Stufe werden aus einer Laminatfolie oder aus einem extrudierten Schlauch Rohrkörper hergestellt, die mit einem Schulterteil mit Gewindehals mit aufgebrachter Verschlusskappe versehen werden. Hierbei kann vor dem Verschlussaufschrauben noch eine Originalitätsmembran auf die Entnahmeöffnung des Gewindehalses aufgebracht, meist aufgeschweißt, werden. Die so hergestellten Tuben werden dann in einer zweiten Stufe, oftmals mittels eines Förderbandes, einer Verpackungsmaschine zugeführt, wo sie in größeren Einheiten verpackt, gegebenenfalls nach einem weiteren Transport und/oder einer Lagerung einem Abfüllbetrieb zum Befüllen der Tuben mit einem Produkt zugeführt werden. Nach dem Befüllen werden die Tuben am Befüllende verschlossen bzw. versiegelt, um dann wieder zu größeren Einheiten für den Weitertransport abgepackt zu werden.

Die Herstellung und das Abfüllen der Tuben erfolgt mit einer Geschwindigkeit von ca. 80 bis 200 Tuben/Minute, wobei das Verpacken in größere Einheiten, insbesondere in Niedriglohnländern, manuell erfolgt, wobei gleichzeitig beim Verpacken der noch leeren Tuben eine visuelle Qualitätskontrolle durchgeführt wird. Insbesondere in Hochpreisländern erfolgt das Verpacken der fertiggestellten noch leeren Tuben, gegebenenfalls auch der befüllten Tuben, automatisch mittels komplizierter Übergabesysteme - meist - in Schachteln. Hierbei erfolgt die Inspektion bzw. Qualitätskontrolle automatisch, wodurch verhindert wird, dass fehlerhaft hergestellte Tuben verpackt bzw. einer Abfüllanlage zugeführt werden.

Im Abfüllbetrieb werden die leeren Tuben entweder manuell oder durch Greifer, auch Mehrfachgreifer, aus der jeweiligen Verpackung entnommen und einer Beschickungsstation einer Abfüllmaschine zugeführt. Von der Beschickungsstation gelangen die Tuben z. B. mittels umlaufender Tubenhalter in der Regel zu mehreren Stationen, wobei ein Füllgut durch das offene Ende in einer Station oder gegebenenfalls auch weiteren Stationen eingebracht und jede befüllte Tube am Befüllende verschlossen, z. B. verschweißt wird, wodurch das eingefüllte Produkt in der Tube luftdicht versiegelt wird. Danach werden die befüllten und verschlossenen Tuben manuell oder automatisch der Abfüllmaschine entnommen und gegebenenfalls neu verpackt einem Endverbraucher zugeführt.

Diese Art der Herstellung und Verpackung weist eine gewisse Flexibilität beim Abfüller auf, ist jedoch mit einer Reihe von Nachteilen behaftet, die einmal in der komplizierten Logistik und Übergabetechnik (Transfertechnik), in der Verstaubungs- und Verschmutzungsgefahr der abgepackten leeren Tuben u.a. durch die zahlreichen Berührungen mit Übergabeeinrichtungen, der meist notwendigen Entsorgung der eingesetzten Verpackungsbehälter, meist Kartonschachteln, und der erforderlichen Lagerhaltung liegen, wodurch einerseits totes Kapital erforderlich ist und anderseits erhöhte Transportkosten entstehen.

Aufgabe der Erfindung ist es, einerseits Anlagen zur Verfügung zu stellen, die beispielsweise die Herstellung von 450 - 500 Tuben/Minute mit Tubendurchmessern z. B. von vorzugsweise 22 bis 40 mm, oder größeren und kleineren, ermöglichen, und die Anordnung dieser Menge an hergestellten Tuben in wiederverwendbaren transportablen Verpackungen - auch zum Befüllen - ohne Umpacken ermöglichen.

Diese Aufgabe wird durch eine Anlage gemäß dem Oberbegriff des Anspruchs 1 mit den im Kennzeichen enthaltenden Merkmalen gelöst.

Vorteilhafte Ausgestaltungen sind den Unteransprüchen zu entnehmen.

Nachstehend wird die Erfindung an einem Ausführungsbeispiel einer Anlage zum Herstellen und Verpacken von Tuben unter Bezug auf Figuren näher erläutert. Es zeigt:
- Fig. 1: eine Anlage in Längsansicht;
- Fig. 2: die Anlage nach Fig. 1 in Ansicht von oben;
- Fig. 3: die Anlage nach Fig. 1 von der Querseite mit einer Doppelrolle;
- Fig. 4: eine Sammeleinrichtung für Tuben in schematischer Darstellung;
- Fig. 5: ein Auslaufband aus zwei zusammenwirkenden Zahnriemen;
- Fig. 6 a - e: die Übernahme einer einzelnen Tube

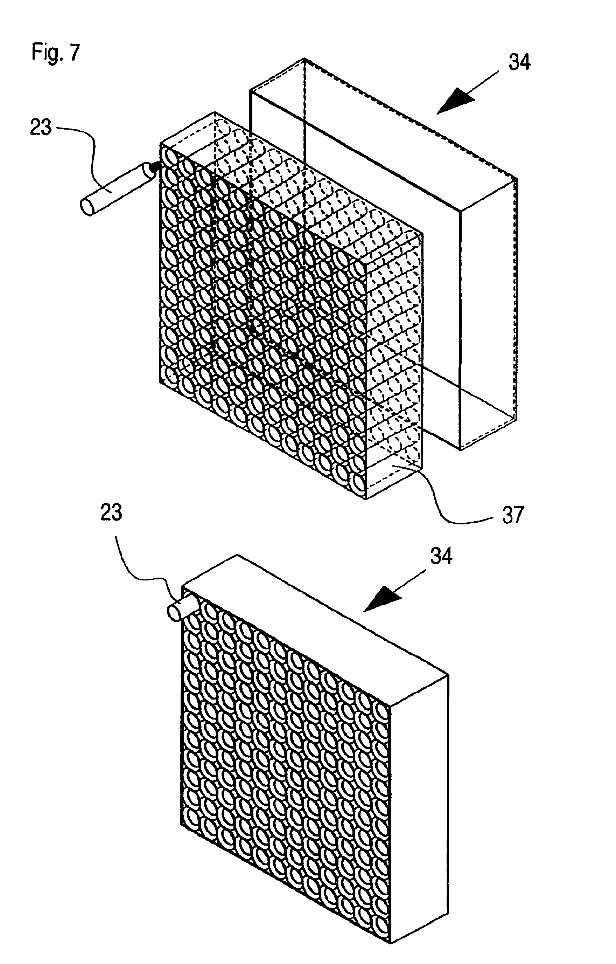

- Fig. 7: Trays für Tuben.

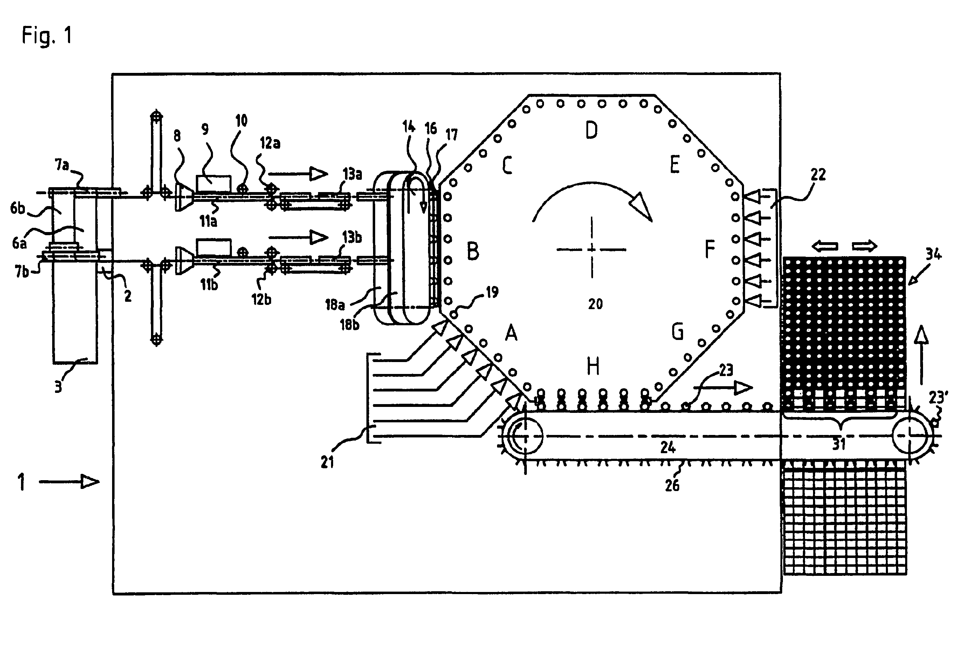

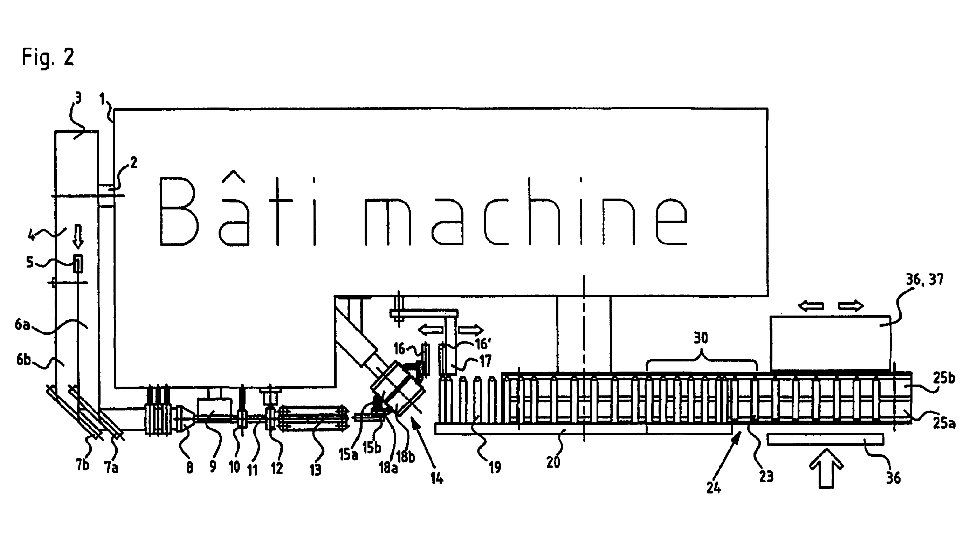

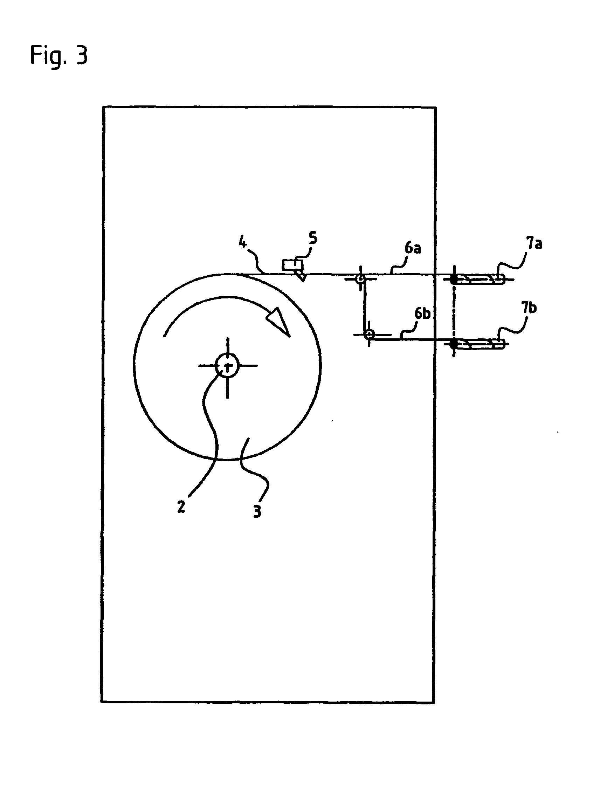

In Fig. 1 ist die Längsseite einer erfindungsgemäßen Anlage in Seitenansicht dargestellt. An ihrer linken Stirnseite 1 ist auf einer Achse 2 drehbar - gegebenenfalls auch angetrieben - eine Doppelrolle 3 (s. a. Fig. 2 und 3) eines Folienbandes 4 angeordnet. Durch diese stirnseitige Anordnung in der Anlage wird Platz in und auf der Längsseite eingespart. Ein Trennmesser 5 schneidet die Doppelbahn 3 des Folienbandes 4 in zwei Einzelbahnen 6a und 6b auf. Jede Einzelbahn 6a, 6b wird durch eine Wendestange 7a, 7b, gegebenenfalls mit geführten Rollen, um 90° auf die Längsseite der Anlage umgelenkt. Die Umlenkung erfolgt so, dass die Einzelbahnen 6a, 6b - wie in Fig. 1 dargestellt - in zwei übereinander angeordneten Ebenen weitergeführt werden. Zu jeder Einzelbahn 6a, 6b sind jeweils eine Formglocke 8, ein Schweißkopf 9 sowie Press- und Kühleinrichtungen 10 vorgesehen, durch die die Verformung zu einem Rohrkörper 11 (Endlosrohren 11a, 11b) erfolgt, wobei hier auch das Anbringen einer hier überlappenden Seitenlängsnaht, z. B. durch Verschweißen erfolgen kann.

Das Folienband 4 kann bereits Druck- oder Schriftbilder (nicht dargestellt) aufweisen und auch als Drei- oder Mehrfachband gestaltet sein, wobei dann weitere Trennmesser 5 und weitere Ebenen zur Herstellung der jeweils notwendigen Anzahl von Endlosrohren vorzusehen wären.

Entsprechend der gewünschten Länge der Rohrkörper 11 bzw. eines Druckbildes werden durch Querschneider 12a, 12b, die z. B. eine Passersteuerung aufweisen, die Endlosrohre 11a, 11b in Rohrkörperabschnitte 13a, 13b mit einer jeweils gewünschten Länge abgetrennt. Ein Umsetzgerät 14 mit Saugprismen 15, die um 45° gekröpft sein können, übernimmt im Taktbetrieb jeweils zwei Rohrkörperabschnitte 13a, 13b bis insgesamt sechs Rohrkörperabschnitte 13a, 13b zu einer "Transfergruppe" zusammengestellt sind.

Anschließend führt das Umsetzgerät 14 die "Transfergruppe" aus sechs Rohrkörperabschnitten 13a, 13b in eine um 90° gewendete Übernahmeposition 16, wo sie von einem horizontal beweglichen Vakuumaufschiebehalter 17 übernommen werden, d. h., es werden hierbei jeweils sechs Rohrkörperabschnitte 13a, 13b übergeben. Das Umsetzgerät 14 besteht aus zwei unabhängig voneinander arbeitenden Einzelumsetzbändern 18a und 18b mit jeweils sechs Saugprismen 15a, 15b. Diese Einzelumsetzbänder 18 sind so gesteuert und angetrieben, dass ein getaktetes Aufnehmen von je zwei Rohrkörperabschnitten 13a, 13b, im vorliegenden Fall im Takt 450/2 = 225/Minute, und ein ebenso getaktetes Abgeben, hier im Takt 450/6 = 75/Minute, bei jeweils sechs Rohrkörperabschnitten 13a, 13b gewährleistet wird, bzw. möglich ist.
Diese beiden Systeme arbeiten mit einer 180° Phasenverschiebung im Wechsel nach jeder Arbeitsseite.

Jeder Aufschiebehalter 17 führt eine lineare Auf- und Abbewegung aus, um z. B. die sechs Rohrkörperabschnitte 13a, 13b aus der Übernahmeposition 16 des Umsetzgerätes 14 in eine Aufschiebeposition 16' deckungsgleich (koaxial) zu Dornen 19 eines Drehtellers 20 zu bringen. Hierbei werden die jeweils sechs Rohrkörperabschnitte 13a, 13b gleichzeitig gemeinsam durch nicht dargestellte Mittel, z. B. Aufschiebestösseln auf die Dorne 19 aufgeschoben.

Der Drehteller 20 ist derart gestaltet, dass jeweils sechs Dorne 19 in einem Schritt bzw. Takt nacheinander, beispielsweise acht, Stationen A- H (s. Fig. 1) zugestellt werden können. Durch den Drehteller 20 werden die Dorne 19 in einem Schritt nacheinander den einzelnen Stationen A - H mit Vorrichtungen zur Zusammenstellung von hier sechs vollständigen Tuben zugestellt. An den Stationen A - H werden alle jeweiligen Dorne 19 mit den notwendigen Komponenten versorgt bzw. von zugeführten Werkzeugen beaufschlagt.

Bei dem dargestellten Ausführungsbeispiel werden bei der Station A gleichzeitig sechs Schulterstücke 21 mit Gewindehals auf die freien Ende der Dorne 19 aufgesetzt, bei Station B werden mittels Vakuum durch den Aufschiebehalter 17 sechs Rohrkörperabschnitte 13a, 13b über die Schulterstücke 21 hinweg auf die Dorne 19 aufgeschoben, d. h. auch gegeneinander positioniert, in der Station C werden die Tubenschultern 21 vorgeheizt, die in Position D mit dem Rohrkörperabschnitten 13a, 13b mittels HF-Induktionserwärmung verschweißt werden, in der Station E können Originalitätssicherungsmembranen (nicht dargestellt) auf die Entnahmeöffnung in den Schulterstücken 21 aufgesiegelt werden, wobei diese Station E auch beispielsweise zur Kühlung der verschweißten Schulterstücke 21 verwendet werden kann, in der Station F können Tubenverschlüsse 22 aufgeschraubt werden, die dann in Station G nachgeschraubt werden können, z. B. mit einem präzisen Drehmoment von 35 Ncm, wobei schließlich in der Station H die nun fertigen Tuben 23 von den Dornen 19 des Drehtellers 20 abgenommen bzw. entfernt werden, um z. B. auf ein kontinuierlich laufendes Auslaufband 24 zu gelangen.

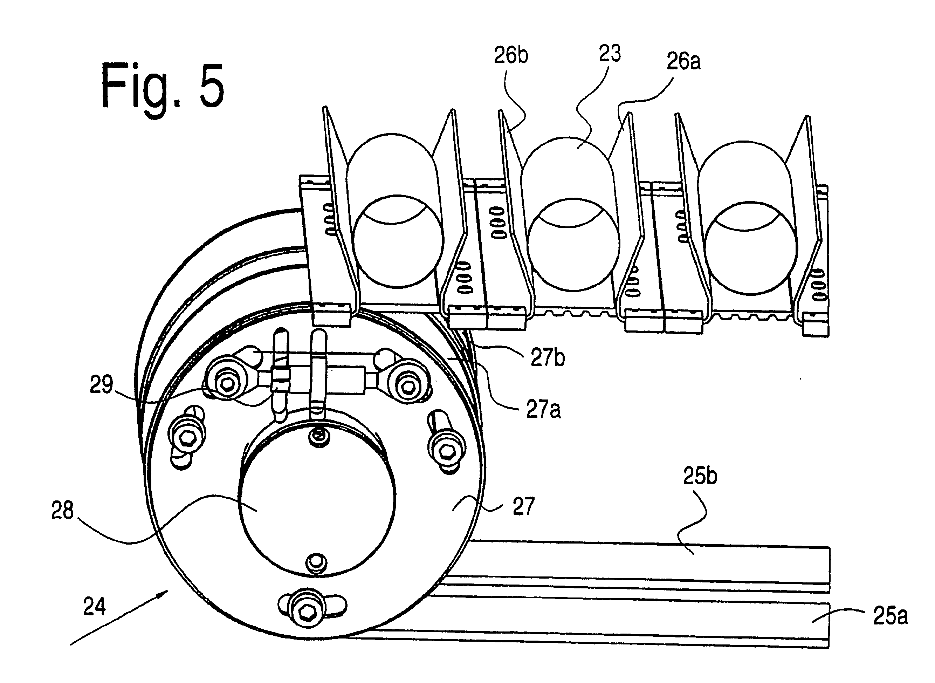

Das in Fig. 5 dargestellte Auslaufband 24 besteht aus zwei parallel nebeneinander angeordneten innenverzahnten Zahnriemen 25a und 25b, die mit Transportprismen 26 versehen sind. Die Transportprismen 26 bestehen aus zwei Teilprismen 26a, 26b, die gemeinsam auf den Zahnriemen 25a, 25b befestigt sind, die als Transportbänder dienen. Jeder der beiden Zahnriemen 25a, 25b ist durch eine verzahnte Antriebsriemenscheibe 27a bzw. 27b und eine frei gelagerte Umlenkriemenscheibe (nicht dargestellt) gespannt und geführt. Hierbei sind die Antriebsriemenscheiben 27a und 27b auf einer gemeinsamen Antriebswelle 28 angeordnet und durch eine Verstelleinrichtung 29 in ihrer relativen Winkel- bzw. Phasenlage gegeneinander verstellbar auf der Antriebswelle 28 angeordnet. Durch die Verstellung der Winkellage der Antriebsscheiben wird eine lineare Verschiebung der beiden Zahnriemen 25a, 25b bewirkt, wodurch gleichzeitig sämtliche Transportprismen 26 auf sehr einfache und zeitsparende Weise den jeweiligen frei gewählten Tubendurchmessern optimal anpassbar sind. Hierdurch ist die geometrische Achse aller Tuben 23 für alle Tubendurchmesser sehr einfach und immer auf der gleichen Höhe einstellbar. Die Anordnung der Transportprismen 26 entspricht im vorliegenden Beispiel dem Teilungsabstand der Dorne 19 und beträgt 95 mm. Da hier sechs Dorne 19 vorgesehen sind erfolgt die Zuführung der Schulterstücke 21 und der Tubenverschlüsse 22 ebenfalls sechsfach, wobei auch z. B. vier, acht oder andere Anzahlen möglich sind.

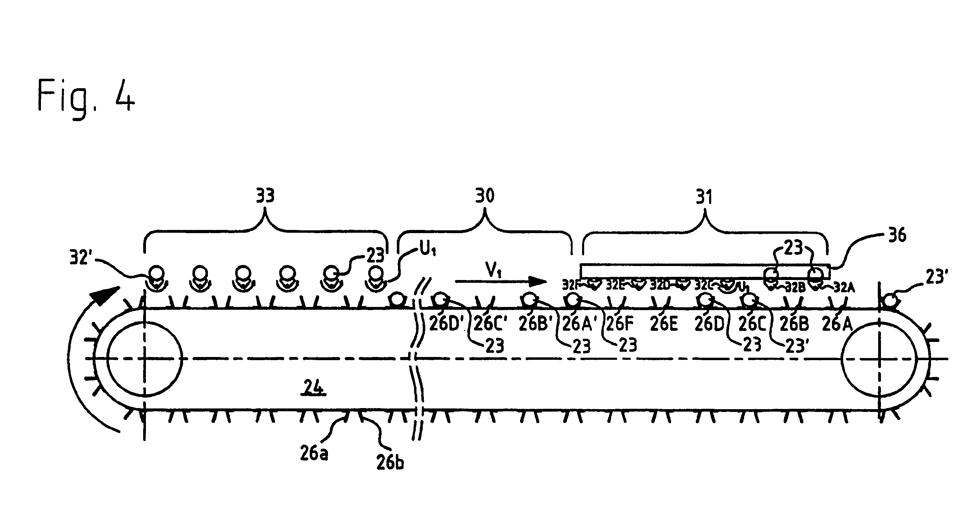

Auf dem in Fig. 4 dargestellten Auslaufband 24 können die Tuben 23 beispielsweise vier verschiedene Kontroll- und Ausschleuszonen durchlaufen, die sich z. B. im Bereich 30 entlang eines Teils oder der ganzen Länge des Obertrums des Auslaufbandes 24 befinden. Die vier Kontroll- und Ausschleuszonen können beispielsweise sein: eine erste Kontrolle auf Tuben ohne Verschluss; eine zweite Kontrolle als statistische Qualitätskontrolle; eine dritte Kontrolle auf unbrauchbare Ausschußtuben und eine vierte Kontrolle auf gute (verwendbare) Tuben. In der statistischen Qualitätskontrolle können in zeitlich frei wählbaren Intervallen automatisch Mustertuben ausgeschleust werden. Ausschusstuben bzw. fehterbehaftete Tuben 23' können am Ende des Auslaufbandes 24 ausgeworfen werden.

Am Ende des linearen Bereiches des Auslaufbandes 24 ist eine Sammeleinrichtung 31 mit z. B. sechs rotierenden Ansaugprismen 32 angeordnet, durch die gute (einwandfreie) Tuben 23 lückenlos, z. B. in Trays 34, aufgenommen werden können.

Durch dieses vorgestellte Vierwegesystem mit dem selektiven Auswerfen unterschiedlich verwendbarer Tuben 23 an örtlich verschiedenen Stellen entlang des Auslaufbandes 24 ist es möglich, jeweils in Abhängigkeit der jeweiligen Qualitätseigenschaften bzw. der Art der Tuben 23 - ohne jegliches manuelles Eingreifen - die geeigneten Tuben 23 von den ungeeigneten Tuben 23' voneinander zu trennen.

Die sechs Saugprismen 32 im Bereich 31 (Fig. 4) sind im gleichen Teilungsabstand wie die reinen Transportprismen 26 angeordnet. Durch eine individuelle Ansteuerung der Drehbewegung der sechs Saugprismen 32 können somit alle auf dem Auslaufband 24 herangeführten Tuben 23 nach frei wählbaren und einstellbaren Kriterien lückenlos gesammelt werden, z. B. so, dass nur absolut einwandfreie Tuben 23 erfasst werden.

Eine Möglichkeit der Steuerung hierzu besteht über das Erfassen der beim Durchlaufen der verschiedenen Arbeitsstationen A bis H tatsächlich vorhandenen jeweiligen Prozessparameter oder Produktionsparameter, bezogen auf eine Tube 23, auf die dann jede auf dem Auslaufband 24 herantransportierte Tube 23 überprüft wird. Das Ergebnis kann der jeweiligen überprüften Tube 23 auch genau zugeordnet werden. Zur Steuerung dient somit das zu jeder Tube 23 hergestellte temporäre "History-File" (Vergangenheitsdatei), der alle wesentlichen Produktionsparameter, z. B. in einem Produktionsdatensatz, zugeordnet sind und fehlerhafte Tuben 23', gemäß den eingestellten Ausscheidungskriterien, an einer geeigneten Stelle aussortiert werden bzw. erfasst werden. Bei der Erfassung kann festgestellt werden, ob z. B. die Schweißtemperatur oder das Vorheizen auf dem gewünschten Sollwert erfolgte oder nicht ausreichend war. War der vorgegebene Sollwert nicht erreicht und sind dadurch fehlerhafte Tuben 23' hergestellt worden, müssen sie ausgeschieden werden. Es kann auch ein fehlender Verschluss 22 auf einer Tube 23 erkannt werden. Fehlerhafte oder nicht komplette Tuben 23 werden an einer definierten Stelle entfernt. Durch die geschilderte Steuerung wird gewährleistet, dass nur absolut einwandfreie Tuben 23 der Sammeleinrichtung 31 zugeführt werden.

Die in Fig. 4 dargestellte Tubenübergabe von den Dornen 19 des Drehtellers 20 auf das kontinuierlich laufende Auslaufband 24 erfolgt in einem Ablegebereich 33 bzw. einer Ablegestation für jeweils alle sechs - eine Einheit bildende - Dorne 19 des Drehtellers 20. Sie können z. B. durch nicht dargestellte Abnahmezangen von den Dornen 19 abgezogen und gegebenenfalls mittels drehbarer Halter 32' in Transportprismen 26 abgelegt werden. Eine der Vorschubbewegung des Auslaufbandes 24 angepasste Drehbewegung der Halter 32' sorgt für eine vollständige reibungslose Übergabe, wobei jeweils alle Tuben 23 einer Einheit (hier sechs) entladen werden und auf das Auslaufband 24 gelangen.

Die Selektion nach der Qualität der hergestellten Tuben 23 entsprechend der oben beschriebenen Kriterien erfolgt erst in der nachfolgende Zone 30 des Auslaufbandes 24 (siehe Fig. 4).

In der dieser nachfolgenden Zone 30 werden dann nur die einwandfreien Tuben 23 mittels der Sammeleinrichtung 31 jeweils als Einheit- hier sechs Tuben 23- gesammelt und erst nach dem Erreichen einer vollständigen Einheit, d. h. hier von sechs einwandfreien Tuben, gemeinsam lückenlos in spezielle Trays 34 übergeben.

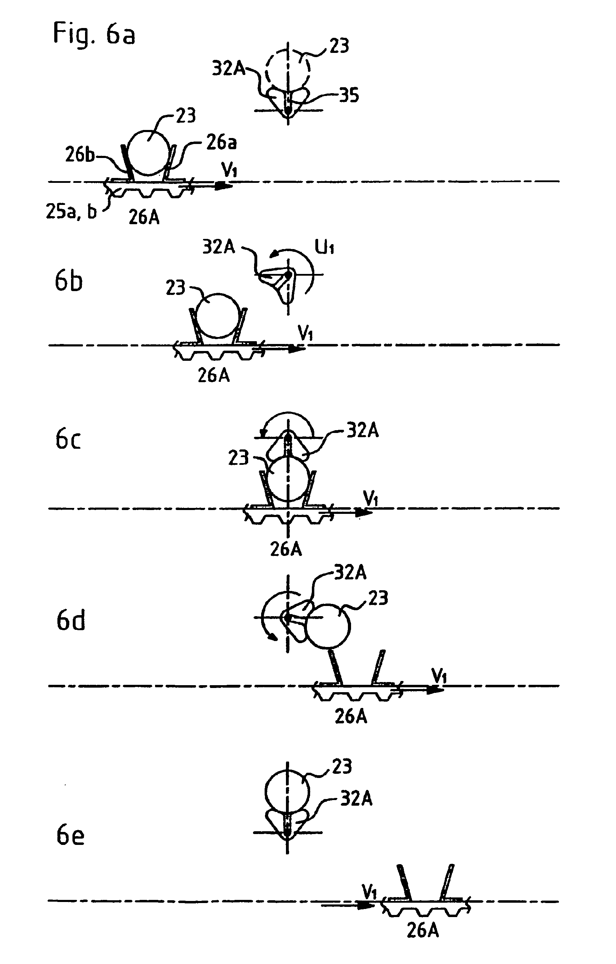

Die Sammeleinrichtung 31 weist sechs Stationen mit sechs drehbaren Haltern 32A, 32B, 32C, 32D, 32E und 32F mit Saugprismen auf. In Fig. 6 ist vereinfacht nur ein einziger Halter 32A mit Saugprisma dargestellt. Alle Halter 32 mit Saugprismen sind parallel und oberhalb des Auslaufbandes 24 angeordnet. In der jeweiligen Übergabe- bzw. Übernahmeposition bezogen auf das Auslaufband 24 weist jeder Halter 32, ein Saugprisma mit einer Kavität auf, die in der jeweiligen Rast- bzw. Ruhestellung (s. Fig. 6a) nach oben gerichtet ist. Nähert sich auf dem Sammelband 24 im Transportprisma 26A eine als brauchbar erkannte Tube 23 mit geradliniger Geschwindigkeit V1 der Station 32A erfolgt eine Drehung des Saugprismas des Halters 32A mit Umfangsgeschwindigkeit U1 und durch die durch die Bohrungen 35 aufgebrachte Saugkraft wird die Tube 23 mittels des Saugprismas des Halters 32A erfasst. Um eine einwandfreie Übernahme der Tube 23 sicherzustellen, wird die Umfangsgeschwindigkeit U1 möglichst eng an die geradlinige Geschwindigkeit V1 angepasst oder ihr gleich gewählt. Die Bohrungen 35 im Halter 32, die in seiner Kavität münden, sind an eine nicht dargestellte Saugquelle angeschlossen, wodurch die Tube 23 aus dem Transportprisma 26A entnommen wird.

Im in Fig. 4 als Ausführungsbeispiel dargestellten Momentanzustand ist auch die nachfolgende gute = einwandfreie Tube 23 vom Transportprisma 26B an der Station 32B durch den Halter 32B entnommen worden.

Sofern entsprechend der vorgenommenen Selektion eine sich als unbrauchbar erkannte Tube 23' im Transportprisma 26C dem nächsten freien Halter 32C mit Saugprisma nähert, dreht sich der Halter 32C nicht und die fehlerhafte Tube 23' verbleibt auf dem Auslaufband 24 und wird an dessen Ende abgeworfen bzw. entsorgt.

Ist die nächste auf dem Auslaufband 24 ankommende Tube 23 im Transportprisma 26D wieder in Ordnung, dreht sich der Halter 32C mit Saugprisma und erfasst die Tube 23 und dreht sie nach oben, so dass in der Position 32C eine dritte einwandfreie Tube 23 vorliegt. Das gleiche erfolgt bis eine vierte einwandfreie Tube 23 aus dem Transportprisma 26A' in der nachfolgenden Position 32D, dann eine fünfte aus 26B' in 32E und schließlich eine sechste aus 26D' in 32F liegt, d. h. bis sechs einwandfreie Tuben 23 in allen Stationen 32A - 32F der Sammeleinrichtung 31 vorliegen. Die unbesetzt dargestellten Transportprismen 26E und 26F fahren unter der Sammeleinrichtung 31 durch, ohne dass einer der drehbaren Halter 32 aktiviert wird. Sodann werden alle sechs in den Stationen 32A - 32F angeordneten Tuben 23 gemeinsam und damit lückenlos einem Tray 34 übergeben, z. B. mittels eines gemeinsamen - nur angedeuteten - Schiebers 36 überführt. Entsprechend der sukzessiven Beladung wird dann das Tray 34 zur Aufnahme der nächsten Einheit von einwandfreien Tuben 23 verschoben. Hierdurch ist gewährleistet, dass automatisch nur als einwandfrei erkannte Tuben 23 im Tray 34 landen.

Die Sammeleinrichtung 31 kann auch zum "Lückenauffüllen" in einem beliebigen Tubentransportsystem z.B. einem Tubenspeicher dienen.

Das gefüllte Tray 34 wird als solches z. B. über Transportbänder einer beliebigen Befüllstation zugeführt, wo die im Tray 34 angeordneten Tuben 23 mit einem Produkt befüllt werden. Die Befüllung kann auch erst dann erfolgen, wenn die Tuben 23 bereits dem Tray 34 entnommen sind. Es ist offensichtlich, dass durch die Erfindung die Anzahl der notwendigen Operationen sich deutlich verringern lassen und dass sie sich auch automatisieren lassen, so dass Handarbeit nicht notwendig ist.

## Patentansprüche

1. Anlage zum Herstellen und Verpacken von aus einem Rohrkörper (13a, b) aus mindestens einer Kunststofffolie und einem einends verbundenen Schulterstück (21) mit Gewindehals und aufgebrachter Verschlusskappe (22) bestehenden Tuben (23), die über ein Transportband einer Verpackungsstation zugeführt werden, wo sie zu größeren Einheiten verpackt werden, **dadurch gekennzeichnet, dass** das Folienband (4) ein Zwei- oder Mehrfachband ist, das durch ein oder mehrere Trennmesser (5) in Einzelbahnen (6a, b) geschnitten wird, die jeweils in parallelen Ebenen zu Endlosrohren (11a, b) verschweißt und durch Querschneider (12a, b) auf die gewünschte Rohrlänge abgelängt werden, wonach jeweils die parallel hergestellten abgelängten Rohrkörper (13a, b) zu einer größeren Transfergruppe zusammengestellt und gemeinsam auf einen eine entsprechende Anzahl von Dornen (19) aufweisenden Drehteller (20) übergeben werden, durch den sie gemeinsam und schrittweise Stationen (A bis H) zum Aufbringen des Schulterstücks (21) mit Gewindehals und der Verschlusskappe (22) zugeführt werden, wonach die fertigen Tuben (23) auf einem Auslaufband (24) abgelegt werden, das mindestens aus zwei parallel nebeneinander liegenden Zahnriemen (25a und 25b) mit Transportprismen (26a und 26b) besteht, deren Teilung der der Dorne (19) auf dem Drehteller (20) entspricht, und Kontrollzonen zur Überprüfung der Tuben (23) zugeführt und die einwandfreien. Tuben (23), mittels dem Abstand der Transportprismen (26) entsprechenden, drehbaren Ansaugprismen (32) vom Auslaufband (24) aufgenommen und lückenlos einem Tray (34) zugeführt werden.

2. Anlage nach Anspruch 1, **dadurch gekennzeichnet, dass** die Rolle (3) mit der Laminatfolie senkrecht zu den herzustellenden Rohrkörpern (13a, b) angeordnet und deren Einzelbahnen (6a, b) zur Bildung der Rohrkörper (13a, b) jeweils um 90° umgelenkt sind.

3. Anlage nach Anspruch 1 und 2, **dadurch gekennzeichnet, dass** die Einzelbahnen (6a, b) übereinander zu Endlosrohren (11a, b) verschweißbar sind.

4. Anlage nach Anspruch 1 und 2, **dadurch gekennzeichnet, dass** die Einzelbahnen (6a, b) nebeneinander zu Endlosrohren (11a, b) verschweißbar sind.

5. Anlage nach einem der Ansprüche 1 bis 4, **dadurch gekennzeichnet, dass** die nicht verwendbaren Tuben (23') durch das Auslaufband (24) aus der Anlage austragbar sind.

6. Anlage nach einem der Ansprüche 1 bis 5, **dadurch gekennzeichnet, dass** das Auslaufband (24) aus zwei gegeneinander phasenverschiebbar angeordneten Zahnriemen (25a und 25b) mit Transportprismen (26a und 26b) besteht.

7. Anlage nach einem der Ansprüche 1 bis 6, **dadurch gekennzeichnet, dass** jedes Tray (34) einen an die Durchmesser der Tuben (23) angepassten Rastereinsatz aufweist.

8. Anlage nach einem der Ansprüche 1 bis 7, **dadurch gekennzeichnet, dass** eine Sammeleinrichtung (31) mit mehreren Stationen vorgesehen ist.

## Claims

1. Installation for producing and packing tubes (23) comprising a pipe body (13a, b) consisting of at least a plastic film and a shoulder element (21) joined at one end with a threaded neck and an attached closing cap (22), whereby the tubes are supplied via a conveyor belt to a packing station where they are packed into larger units **characterised in that** the film strip (4) is a two-ply or multi-ply strip which is cut into individual plies (6a, b) by one or more slitting knives (5), whereby the individual plies are bonded in parallel planes to form endless pipes (11a, b) and cut into the desired tube lengths by cross cutters (12a, b), whereupon the tube bodies (13a, b) produced and cut into sections in parallel are gathered together to form a larger transfer group and jointly transferred to a rotary table (20) comprising a corresponding number of mandrils (19) and which is used to supply these jointly and gradually to stations (A to H) to attach a shoulder element (21) with a threaded neck and the closing cap (22), whereafter the finished tubes (23) are placed on a delivery belt (24) which comprises at least two toothed belts (25a and 25b) positioned parallel to each other with transport prisms (26a and 26b) whose pitch corresponds to that of the mandrils (19) on the rotary table (20) and are fed to control zones for inspection of the tubes (23) and the perfect tubes (23) are picked up by means of rotatable suction prisms (32) corresponding to the distance between the transport prisms (26) by the delivery belt (24) and continuously fed to a tray (34).

2. Installation according to Claim 1, **characterised in that** the roller (3) is arranged with the laminate film perpendicular to the pipe bodies (13a, b) to be produced and their individual plies (6a, b) are each deflected by 90° to form the pipe bodies (13a, b).

3. Installation according to Claim 1 and 2, **characterised in that** the individual plies (6a, b) can be bonded on top of each other to form endless pipes (11a, b).

4. Installation according to Claim 1 and 2, **characterised in that** the individual plies (6a, b) can be bonded beside each other to form endless pipes (11a, b).

5. Installation according to one of Claims 1 to 4, **characterised in that** the non-usable tubes (23') can be discharged from the installation by means of the delivery belt (24).

6. Installation according to one of Claims 1 to 5, **characterised in that** the delivery belt (24) comprises two toothed belts (25a and 25b) which are arranged so as to allow phase shifting in relation to each other and encompass transport prisms (26a and 26b).

7. Installation according to one of Claims 1 to 6, **characterised in that** each tray (34) includes a grid insert adapted to the diameter of the tubes (23).

8. Installation according to one of Claims 1 to 7, **characterised in that** a collecting apparatus (31) with several stations is provided.

## Revendications

1. Installation de production et d'emballage de tubes (23) composés d'un corps tubulaire (13a, b) comprenant au moins une feuille plastique et une partie d'épaulement (21) reliée au niveau d'une extrémité, avec un col fileté et un capuchon de fermeture appliqué (22), transférés par une bande de transport vers une station d'emballage, où ils sont emballés en des unités plus grandes, **caractérisée en ce que** la bande de feuille (4)) est constituée par une bande double ou multiple, découpée par un ou plusieurs couteaux de séparation (5) en des bandes individuelles (6a, b), soudées respectivement dans des plans parallèles en des tubes sans fin (11a, b) et découpées par un dispositif de coupe transversal (12a, b) en fonction de la longueur voulue du tube, les corps tubulaires découpés à la longueur voulue et à production parallèle (13a, b) étant ensuite regroupés en un groupe de transfert plus grand et étant transmis ensemble sur un plateau tournant (20) comportant un nombre correspondant de mandrins (19), qui les amène ensemble et de manière progressive vers des stations (A à H) servant à appliquer la partie d'épaulement (21) avec le col fileté et le capuchon de fermeture (22), les tubes fmis (23) étant ensuite déposés sur une bande de sortie (24) comprenant au moins deux courroies dentées juxtaposées de manière parallèle (25a et 25b) comportant des prismes de transport (26a et 26b), dont la séparation correspond à celles des mandrins (19) sur le plateau tournant (20), avant un transfert vers des zones de contrôle en vue du contrôle des tubes (23), les tubes présentant un état parfait (23) étant reçus par l'intermédiaire de prismes d'aspiration rotatifs (32), correspondant à la distance des prismes de transport sur la courroie de sortie (24) et étant transférés en continu vers un plateau (34).

2. Installation selon la revendication 1, **caractérisée en ce que** le rouleau (3) comportant la feuille stratifiée est agencé perpendiculairement aux corps tubulaires (13a, b) devant être produits, les bandes individuelles correspondantes (6a, b) servant à la formation des corps tubulaires (13a, b) étant respectivement déviées de 90°.

3. Installation selon les revendications 1 ou 2, **caractérisée en ce que** les bandes individuelles (6a, b) peuvent être soudées en des tubes sans fin (11a, b) dans un état superposé.

4. Installation selon les revendications 1 et 2, **caractérisée en ce que** les bandes individuelles (6a, b) peuvent être soudées en des tubes sans fm (11a, b) dans un état juxtaposé.

5. Installation selon l'une des revendications 1 à 4, **caractérisée en ce que** les tubes non utilisables (23') peuvent être sortis de l'installation par l'intermédiaire de la bande de sortie (24).

6. Installation selon l'une des revendications 1 à 5, **caractérisée en ce que** la bande de sortie (24) comprend deux courroies dentées (25a et 25b) à décalage de phase mutuel, comportant des prismes de transport (26a et 26b).

7. Installation selon l'une des revendications 1 à 6, **caractérisée en ce que** chaque plateau (34) comporte un insert de grille adapté au diamètre des tubes (23).

8. Installation selon l'une des revendications 1 à 7, **caractérisée en ce qu'**elle comporte un dispositif de collecte (31) comportant plusieurs stations.
